# EUROPÄISCHE PATENTSCHRIFT

(11) **EP 3 290 202 B1**
(45) Veröffentlichungstag und Bekanntmachung des Hinweises auf die Patenterteilung: **26.06.2019**
(21) Anmeldenummer: 17187863.0
(22) Anmeldetag: 25.08.2017
(51) Int. Cl.: B32B 17/10

(54) **ELEKTROCHROMES GIESSHARZVERBUNDGLAS UND VERFAHREN ZU DESSEN HERSTELLUNG**
ELECTROCHROMIC CAST RESIN COMPOUND GLASS AND METHOD FOR ITS PRODUCTION
VERRE FEUILLETÉ ÉLECTROCHROMÉTRIQUE POURVU D'INTERCALAIRE EN RÉSINE À COULER ET SON PROCÉDÉ DE FABRICATION

(30) Priorität: 29.08.2016 DE 102016216155
(43) Veröffentlichungstag der Anmeldung: 07.03.2018
(73) Patentinhaber: Fraunhofer-Gesellschaft zur Förderung der angewandten Forschung e.V., 80686 München (DE)
(72) Erfinder: SEEBOTH, Arno, 12557 Berlin (DE); EBERHARDT, Volker, 10407 Berlin (DE); PABEL, Lica, 14943 Luckenwalde (DE)
(74) Vertreter: Pfenning, Meinig & Partner mbB

(56) Entgegenhaltungen:
- EP-A1- 0 683 215
- EP-A1- 1 227 362
- US-A1- 2013 235 323

## Beschreibung

Die Erfindung betrifft ein elektrochromes Gießharzverbundglas, das als Sonnen- und Blendschutz genutzt werden kann. Ein derartiger Scheibenaufbau wird in einem besonders einfachen, einstufigen Gießharzverfahren gefertigt und verfügt damit über die notwendige mechanische Stabilität, um im Bereich der Gebäudeverglasung oder der von Fahrzeugen und Schiffen Verwendung zu finden.

Sowohl bei elektrochromen Anordnungen als auch Gießharzverbundgläsern handelt es sich um seit Jahrzehnten etablierte Technologien.

Elektrochrome Anordnungen bestehen üblicherweise aus zwei parallel ausgerichteten Substraten aus Glas oder Kunststoff, die jeweils einseitig mit einer leitfähigen transparenten Elektrode versehen sind. In einem ersten Schritt wird auf mindestens einem der beiden Elektroden durch Verdampfen, Sputtern oder Gasphasenabscheidung eine meist anorganische elektrochrome Schicht abgeschieden. Auf die zweite Elektrode kann wahlweise auch eine nicht elektrochrome redoxaktive Substanz aufgebracht werden. Anschließend werden die beiden Schichten mit einem Elektrolyten verbunden, so dass die Substrate außen liegen.

Elektrochrome Schichten aus organischen Polymeren hingegen werden meist durch Spin-Coating auf die Elektrode aufgetragen. Organische Polymere sind in der Regel nicht nur deutlich günstiger, sie bieten auch eine größere Farbvielfalt als die zumeist blaufärbenden Metalloxide. In einer weniger gebräuchlichen Variante kann das elektrochrome Polymer auch durch Elektropolymerisation direkt auf dem leitfähigen Substrat abgeschieden werden. Typischerweise geschieht dies aus einer polaren Lösung, wobei große Mengen Lösungsmittel- und Leitsalzabfall anfallen.

Erstrebenswert sind mechanisch und thermisch äußerst stabile elektrochrome Glasverbunde, wie sie nur durch Gießharze erhalten werden. Folienlaminate auf der Basis von PVB haben eine geringere Adhäsionseigenschaft und zeigen bei erhöhten Temperaturen stabilitätsbeeinflussende ungünstige Fließeigenschaften.

Gleichzeitig verlangt der Markt nach vielfältigen Farben oder einfacher Graufärbung, Forderungen, die nur durch organische Substanzen erfüllt werden können. Dabei gilt es, Energie- und Materialaufwand während der Produktion gering zu halten. Dies ermöglicht die Gießharztechnologie, die es erlaubt, die farbgebenden Komponenten bereits mit dem Gießharz zu verarbeiten und Materialabfall auf der einen Seite, hohe Energieaufwendungen, die für das Aufdampfen anorganischer elektrochromer Schichten anfallen auf der anderen Seite, zu reduzieren und, am wichtigsten, die Haftfähigkeit zum Substrat zu verbessern, die durch zuvor aufgebrachte Schichten teilweise erheblich verringert wird.

Leitfähige Gießharze sind kommerziell erhältlich, basieren meist auf Epoxiden und werden durch Zusatz einer beträchtlichen Menge metallischer Nickel- oder Silberpartikel leitfähig gemacht, wodurch sie ein gräulich bis schwarzes Äußerliches erhalten. Der Mangel an Transparenz macht diese Produkte untauglich für die Verwendung in elektrochromen Glasverbunden.

In EP 0 723 675 wird ein transparentes Gießharz auf Acrylatbasis beschrieben, das durch Weichmacher und Leitsalze die Funktion eines Elektrolyten in einer elektrochromen Anordnung übernehmen kann. Es enthält allerdings keine elektrochromen Substanzen oder Vorstufen. Diese Schichten aus anorganischen Metalloxiden müssen in einem separaten Schritt auf das Substrat aufgetragen werden.

DE 10 118 617 beansprucht eine elektrochrome Verglasung für Gebäude durch die Verwendung von Sicherheitsglas und mindestens drei Scheiben, um so zu mechanisch stabileren Verbunden zu kommen. Da dies allerdings für ein deutliches Mehr an Gewicht sorgt, ist diese Lösung für die mobile Verwendung auf Fahrzeugen und Schiffen nicht geeignet.

In US 20130235323 wird ein *in-situ*-Verfahren für die Erzeugung einer elektrochromen organischen Polymerschicht innerhalb der elektrochromen Anordnung aus einem Gelelektrolyten. Darin wird allerdings kein stabilisierendes Acrylharz verwendet. Die beschriebene Mischung besitzt daher nicht die mechanische Stabilität für die Verwendung in Glasfassaden mit steuerbarer Transparenz und sind entsprechend nicht als Bauteil für den aktiv schaltbaren Sonnenschutz in der Architektur oder im Schiffbau geeignet.

Eine elektrochrome Anordnung, die in einem ein-Schritt-Verfahren die Stabilität von Gießharzverbunden liefert und sich als elektrisch schaltbarer Sonnen- und Blendschutz gebrauchen lässt, ist bislang nicht bekannt.

Es war daher Aufgabe der vorliegenden Erfindung, ein elektrochromes Gießharzverbundglas bereitzustellen, das eine besonders hohe mechanische Stabilität zeigt, wobei aber die elektrische Leitfähigkeit und die Transparenz nicht negativ beeinflusst werden sollen.

Diese Aufgabe wird durch das elektrochrome Gießharzverbundglas mit den Merkmalen des Anspruchs 1 und das Verfahren zu dessen Herstellung mit den Merkmalen des Anspruchs 12 gelöst. Die weiteren abhängigen Ansprüche zeigen vorteilhafte Weiterbildungen auf. In Anspruch 17 werden erfindungsgemäße Verwendungen angegeben.

Erfindungsgemäß wird ein elektrochromes Gießharzverbundglas bereitgestellt, das folgende Komponenten aufweist:
- eine erste und eine zweite Glasscheibe, die zumindest auf den zueinander zugewandten Seiten eine transparente leitfähige Beschichtung aufweisen,
- einen Abstandshalter zwischen der ersten und zweiten Glasscheibe, durch den ein Zwischenraum zwischen der ersten und zweiten Glasscheibe gebildet wird,
- den Zwischenraum mit einem aus Alkylacrylat- oder Acrylat-Monomeren und/oder deren Salzen gebildeten Harz sowie mindestens einer elektrochromen Verbindung oder Precursoren hiervon gefüllt ist.

Erfindungsgemäß wird die Erhöhung der Hafteigenschaften des Gießharzes und der damit verbundenen Verbesserung der mechanischen Stabilität bei gleichzeitigem Vermeiden eines Verlustes der elektrischen Leitfähigkeit oder einer Reduktion der Transparenz dadurch, dass ein höherer Anteil der Alkylacrylat- oder Acrylat-Monomere eingesetzt wird, wodurch eine bessere Vernetzung erreicht wird.

Zur Verbesserung der Hafteigenschaften soll ein reaktives Gemisch verwendet werden, das einen hohen Anteil vernetzbarer Monomere auf Basis von Acrylaten oder Alkylacrylaten verwendet werden. Durch die starke Vernetzung entsteht ein sehr starker Glasverbund, der sich auch für Überkopfverglasung oder zur Begehung eignet. Ein derartiger Glasverbund sollte im Rahmen des Stempeltests gemäß DIN ISO 614 mindestens einer Kraft von 8 kN standhalten und auch oberhalb von 60°C einen weiterhin starren, nicht fließenden Verbund bilden, wie es bei auf EVA oder PVB basierenden Laminaten der Fall ist.

Die Acrylatmonomere oder Alkylacrylatmonomere, die zur Verbesserung der Hafteigenschaften im Gießharz zur Anwendung kommen, können aus der folgenden Gruppe stammen:
Methylmethacrylat, Ethylacrylat, Butylacrylat, Hexylacrylat, Isobutylacrylat, tert-Butylacrylat, 1,4-Butandioldiacrylat, 1,4-Butanedioldimethacrylat, Pentaerythritoltetraacrylat, Pentaerythritoltriacrylat, 2-Hydroxyethylacrylat, 2-Hydroxyethylmethacrylat, 4-Hydroxybutylacrylat, 4-Hydroxybutylmethacrtylat, Hydroxypropylacrylat, Methacrylsäure, 2-Methoxyethylacrylat, 2-Carboxyethylacrylat, 2-(Dimethylamino)ethylacrylat, Methyl-2(hydroxymethyl)acrylat, Ethyl-2-(hydroxymethyl)acrylat, Di(ethylenglycol)ethyletheracrylat, 3-(Dimethylamino)propylacrylat, 2-(2-Ethoxyethoxy)ethylacrylat und 2-Hydroxy-3-phenoxypropylacrylat. Darüber hinaus sind Lithium-, Natrium- oder Kaliumsalze von Acrylat oder Alkylacrylaten sowie Oligomere von 2-Carboxyethylacrylat mit bis zu 5 Widerholungseinheiten geeignet. Auch die Verwendung kommerziell erhältlicher transparenter Gießharze mit hoher Klebekraft, beispielsweise Produkte der Firmen Kömmerling GmbH, Lange & Ritter GmbH, Worlee oder TER Chemicals können zur Verbesserung der Hafteigenschaften eingesetzt werden.

Es ist weiter bevorzugt, dass die transparente leitfähige Beschichtung aus FTO, ITO, ATO, AZO, Kohlenstoffnanoröhrchen oder Silber besteht oder dieses im Wesentlichen enthält.

Eine weitere bevorzugte Ausführungsform sieht vor, dass das Harz 1 bis 10 Gew.-% mindestens eines Leitsalzes enthält, insbesondere ausgewählt aus der Gruppe bestehend aus ClO₄⁻, CF₃SO₃⁻, SbF₆⁻, N(CF₂SO₃)⁻, CF₃CO₂⁻, PF₆⁻, OH⁻, BF₄⁻, N(C₂F₄SO₂)⁻ sowie Kombinationen hiervon, insbesondere in Form von Lithiumsalzen.

Vorzugsweise enthält das Harz 10 bis 50 Gew.-% eines polaren Weichmachers, insbesondere ausgewählt aus der Gruppe bestehend aus
- organischen Ester der Kohlensäure, insbesondere Diethylcarbonat, Propylencarbonat, Methylethylcarbonat, Methylpropylcarbonat, Ethylpropylcarbonat oder Ethylencarbonat,
- Polyether, insbesondere von 1,4-Butandiol, 1,3-Butandiol oder 1,2-Ethandiol, mit oder ohne polymerisierbare Endgruppen, sowie
- Mischungen hiervon.

Durch die Erhöhung des Anteils vernetzbarer Einheiten steigt der elektrische Widerstand des Gemisches und erschwert oder verhindert eine elektrochrome Schaltung. Durch die Zugabe eines Leitsalzes kann dem entgegengewirkt werden. Polare Weichmacher unterstützen die Dissoziation dieser Leitsalzkomponente, die sich im Gemisch aus vernetzenden Monomeren und Farbstoffmolekülen nur schwer löst. Durch eine geeignete Kombination der Einzelkomponenten können bis zu 10 Gew.-% des Leitsalzes darin vollständig gelöst werden. Dadurch kann eine sehr hohe Leitfähigkeit bei gleichbleibend hoher Stabilität des Gießharzverbundes gewährleistet werden, ein Kompromiss der für optisch transparente Produkte noch nicht ausreichend erreicht wurde.

Das Harz kann vorzugsweise bis zu 5 Gew.-% eines oder mehrerer π-elektronenreichen organischen Monomers enthalten, die durch Elektropolymerisation irreversibel elektrochrome, stark konjugierte Polymere bilden. Diese lassen sich durch die Variation der Spannung sowie deren Polung zwischen einem neutralen und einer geladenen Spezies hin- und herschalten, was in der Regel mit einer optisch sichtbaren Farbänderung einhergeht. Geeignete elektroaktive Monomere sind beispielsweise Pyrrol, Thiophen, Furan, 3,4-Ethylendioxythiophen, 3,4-Ethylendithiothiophen, 3,4-Propylendioxythiophen, 3,4-(2,2-Dialkylpropylendioxy)thiophen, Bithiophen, Carbazol, Acetylen, Phenylen sowie deren Derivate und Kombinationen dieser. Denkbar sind auch organische elektrochrome Oligomere, die aus diesen Monomeren aufgebaut sind.

Vorzugsweise weist das ausgehärtete Gießharz mit gelöstem elektrochromen Farbstoff im sichtbaren Bereich des Spektrums (Wellenlängenbereich von 380 bis 780 nm) eine Transparenz von mindestens 80 % und im Wellenlängenbereich von 430 bis 780 nm eine Transparenz von mindestens 85 % aufweist.

Es ist bevorzugt, dass das Material der ersten und zweiten Glasscheibe ausgewählt ist aus der Gruppe bestehend aus Floatglas, TVG oder ESG, wobei die Glasscheiben bevorzugt eine Dicke im Bereich von 2 bis 12 mm aufweisen. Zwei Floatglasscheiben variabler Dicke, jedoch idealerweise zwischen 1-12 mm, die mit einer transparenten leitfähigen Beschichtung versehen sind, werden mit einem Spacer aus Acrylklebeband zu einem hohlen Verbund zusammengeklebt. Dazu wird das Klebeband, dessen Dicke zwischen 0,2 - 2,0 mm liegen kann und gleichzeitig den Abstand der Scheiben definiert, entlang der Kanten des Glases auf die Seite der leitfähigen Beschichtung der einen Scheibe geklebt und die zweite Scheibe, ebenfalls mit der beschichteten Seite auf das Klebeband gedrückt, so dass ein Hohlraum zwischen den leitfähigen Schichten entsteht. Dieser wird im Anschluss über einen Trichter oder eine Kanüle mit dem Gießharz befüllt. Eventuelle Lufteinschlüsse werden mit einer Kanüle und Spritze entfernt und die Kanten des Verbundes werden versiegelt.

Eine weitere bevorzugte Ausführungsform sieht vor, dass der Abstandshalter ein Klebeband ist, bevorzugt mit einer Dicke im Bereich von 0,1 bis 2,0 mm, insbesondere von 0,5 bis 1,5 mm.

Das erfindungsgemäße Gießharzverbundglassystem besteht den Stempeltest nach DIN ISO 614 bis zu einer Kraft von vorzugsweise 8 kN, insbesondere von 10 kN.

Eine weitere bevorzugte Ausführungsform zeichnet sich dadurch aus, dass es sich bei der ersten und zweiten Glasscheibe des elektrochromen Gießharzverbundes jeweils um eine gebogene Glasscheibe handelt. Hierbei weist eine der beiden Glasscheiben die transparente leitfähige Beschichtung auf der konvexen Seite auf, während die andere der beiden Glasscheiben die transparente leitfähige Beschichtung auf der konkaven Seite aufweist. Es ergibt sich somit ein gebogener elektrochromer Gießharzverbund.

Erfindungsgemäß wird ebenso ein Verfahren zur Herstellung eines elektrochromen Gießharzverbundglases, wie es zuvor beschrieben wurde, bereitgestellt, das folgende Schritte aufweist:
a) Bereitstellung einer ersten und einer zweiten Glasscheibe, die zumindest auf einer der Seiten eine transparente leitfähige Beschichtung aufweisen,
b) Herstellung einer Verbindung der mit der transparenten leitfähigen Beschichtung versehenen Seiten der ersten und zweiten Glasscheibe über mindestens einen Abstandshalter unter Ausbildung eines Zwischenraums zwischen der ersten und zweiten Glasscheibe,
c) Befüllung des Zwischenraums mit einem Gemisch aus Alkylacrylat- oder Acrylat-Monomeren und mindestens einer elektrochromen Verbindung oder Precursoren hiervon,
d) Thermische und/oder photochemische Vernetzung dieser Mischung unter Ausbildung eines transparenten, leitfähigen Harzes und
e) Durch Anlegen einer Gleichspannung ein elektrochromes konjugiertes Polymer gebildet wird.

Die Befüllung in Schritt c) erfolgt vorzugsweise mittels einer Kanüle oder eines Trichters, wobei gegebenenfalls bei der Befüllung im Zwischenraum eingeschlossene Luftblasen mittels einer Kanüle entfernt werden können.

Vorzugsweise erfolgt die Vernetzung in Schritt d) durch Bestrahlung, insbesondere mit UV-Strahlung und/oder thermisch in einem Ofen bei Temperaturen im Bereich von 80°C bis 120°C.

Für die Vernetzung wird vorzugsweise mindestens ein Polymerisationsstarter eingesetzt, insbesondere ein Photostarter, bevorzugt ausgewählt aus der Gruppe bestehend aus 2,2-Dimethoxy-2-phenylacetophenon, Benzophenon und Dimethoxyacetophenon sowie Mischungen hiervon, oder ein thermischer Starter, bevorzugt ausgewählt aus der Gruppe bestehend aus Azoisobutyronitril, Dibenzoylperoxid, Salze des Peroxodisulfats. Insbesondere Ammoniumperoxodisulfat), tert-Butylperoxid, Diammoniumperoxid sowie Mischungen hiervon.

Das Anlegen einer geringen Gleichspannung an die beiden leitfähigen Beschichtungen der Gläser führt zur Elektropolymerisation und der Abscheidung der elektrochromen Schicht auf der Anode der Anordnung. Der Polymerisationsschritt wird bei einer höheren Spannung als der späteren Schaltspannung vollzogen und kann je nach gewünschter Intensität des Effektes zwischen 10 - 1200 s betragen. Sollten verschiedene Vorläufersubstanzen unterschiedlichen Oxidationspotentials enthalten sein, kann dieser Schritt wiederholt werden, wobei für den ersten Polymerisationsschritt die Spannung entsprechend dem Vorläufer mit dem geringsten Oxidationspotential gewählt wird. Im Wiederholungsschritt erfolgt dann die Polymerisation des zweiten Vorläufers bei dem entsprechenden höheren Oxidationspotential. Die gebildete elektrochrome Schicht zeichnet sich durch sehr schnelle Schaltzeiten aus, bei der 95% der maximalen Färbung (Transmission bei Absorptionsmaximum des elektrochromen Farbstoffs ist minimal) bei 0,05 mW/cm² in maximal 15 Sekunden erreicht wird.

Durch die nachgelagerte Bildung der elektrochromen Schicht kommt es zu einer deutlichen Steigerung der Haftfähigkeit des Gießharzes im Vergleich zu Glasverbünden, bei denen die farbändernde Schicht bereits vor der Härtung des Harzes entweder durch Elektro- oder Gasphasenabscheidung bzw. Sputtern gebildet wurde.

Eine weitere bevorzugte Variante des erfindungsgemäßen Verfahrens zeichnet sich dadurch aus, dass es sich bei der in Schritt a) eingesetzten ersten und zweiten Glasscheibe jeweils um eine gebogene Glasscheibe handelt. Hierbei weist eine der beiden Glasscheiben die transparente leitfähige Beschichtung auf der konvexen Seite auf, während die andere der beiden Glasscheiben die transparente leitfähige Beschichtung auf der konkaven Seite aufweist. Diese Glasscheiben können beispielsweise dadurch erhalten werden, dass kommerziell erhältliche FTO-/ITO-beschichtete Scheiben in einem speziellen Verfahren im losen Verbund gebogen werden. So erhält man zwei gebogene Substrate, je eins mit dem Elektrodenmaterial auf der konvexen bzw. der konkaven Seite. Durch diese spezielle Variante lässt sich ein gebogener Gießharzverbund mit einer elektrochromen Beschichtung, vorzugsweise auf der konkaven Innenseite, herstellen. Dies stellt einen wesentlichen Unterschied zu bisherigen Verfahren dar, da die Aufbringung der elektrochromen Beschichtungen in den gängigen Verfahren technologiebedingt auf plane Flächen beschränkt ist.

Verwendung finden die elektrochromen Gießharzverbundgläser zur Gebäudeverglasung oder Verglasung von Transportmitteln, insbesondere Fahrzeugen oder Schiffen als Sonnenschutz oder Lichtblende.

Anhand der nachfolgenden Beispiele und Figur soll der erfindungsgemäße Gegenstand näher erläutert werden, ohne diesen auf die hier gezeigten spezifischen Ausführungsformen einschränken zu wollen.
Fig. 1 zeigt ein Transmissionsspektrum für das erfindungsgemäße Gießharzverbundglas gemäß Beispiel 1 im ungeschalteten Zustand (OFF) und geschaltetem Zustand (ON).

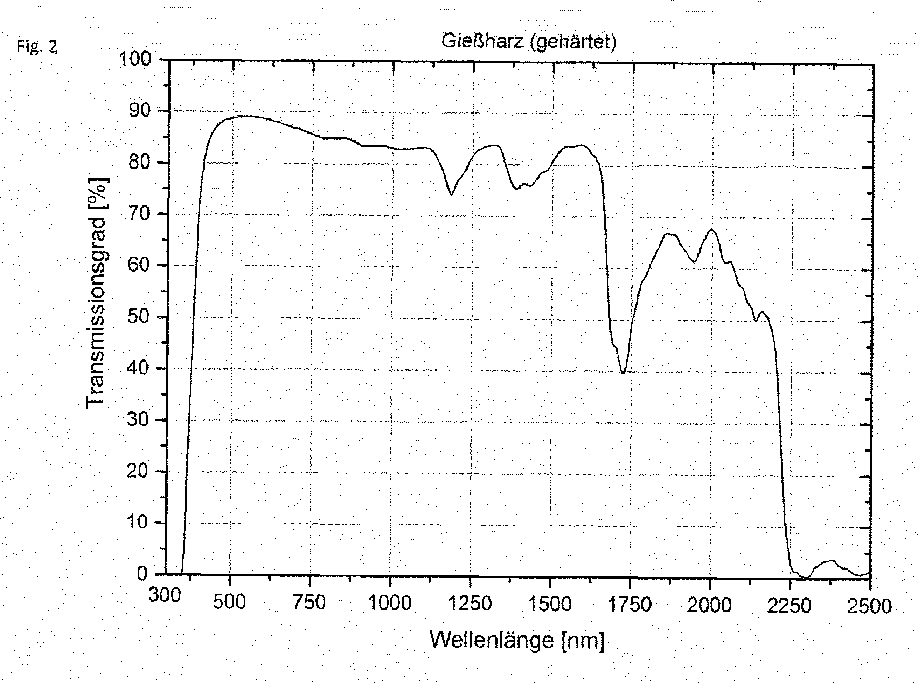

Fig. 2 zeigt ein Transmissionsspektrum für das ausgehärtete Gießharz mit gelöstem, aber unpolymerisiertem elektrochromen Farbstoff.

### Beispiele

### Beispiel 1

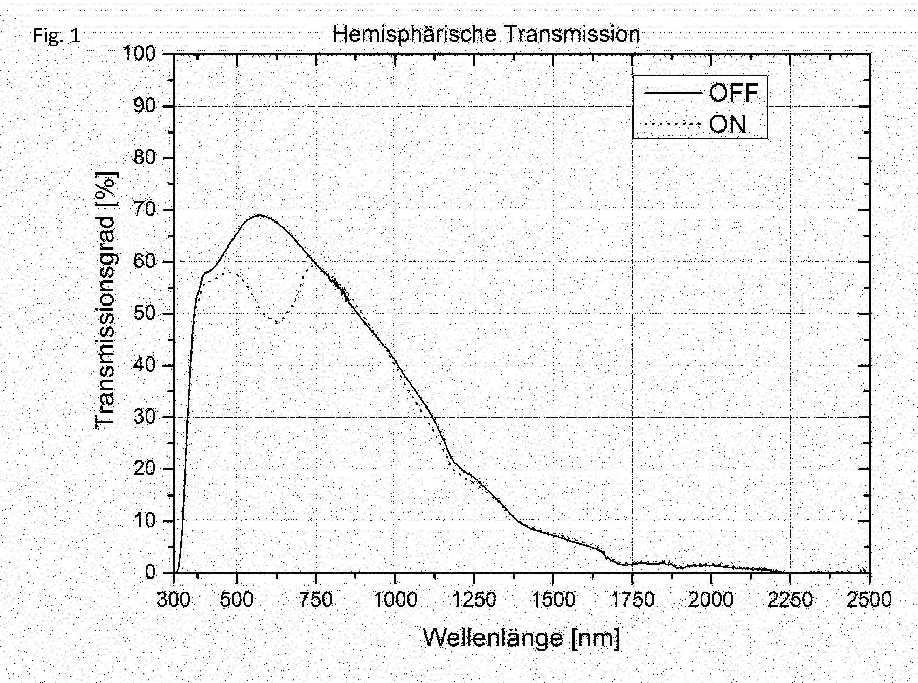

Das elektrochrome Verbundglas wird durch Verkleben von zwei ITObeschichteten Gläsern aus 5 mm Floatglas, die durch ein Acrylklebeband der Dicke 1,5 mm entlang des Randes verbunden werden, vorbereitet. Es wird ein Gemisch aus 72 g Ködiguard UV der Firma KÖMMERLING GmbH (54 g 2-Ethylhexylacrylat, 9 g Acrylsäure, 7,3 g Methylmethacrylat, 1,7 g Tris-(2-methyoxyethoxy)vinylsilan), 36 g Propylencarbonat, 36 g Poly(ethylenglycol)diacrylat (M = 700 g/mol), 14,4 g Lithiumtrifluormethansulfonsäure, 0,2 g 2,2-Dimethoxy-2-phenylaceton-phenon und 1,6 g Ethylendioxythiophen hergestellt und im Dunkeln für 30 min. gerührt. Mittels einer Kanüle oder eines Trichters wird das Gemisch in den Hohlraum zwischen zwei 300 mm x 300 mm Scheiben gefüllt und anschließend der Rand des Fensters mit einem Zwei-Komponenten-Harz versiegelt. Im Anschluss wird ein Glas in einer UV-Bestrahlungskammer für 30 min. ausgehärtet. Durch Anlegen einer 3,0 V-Gleichspannung für 1 min. bildet sich ein transparenter Polyethylendioxythiophen-Film auf der Anode, der bei Entfernen der Spannung blau wird. Der Verbund wird durch kurzes (5 Sekunden) Anlegen einer 1,5 V-Spannung entfärbt (OFF-Zustand), 1,5 V entgegengesetzter Polung färbt die Scheibe blau (ON-Zustand). Beim Stempeldruckversuch angelehnt an DIN ISO 614 wird eine Kraft von Fₘₐₓ = 11,1 kN (Weg bei Fₘₐₓ) erreicht. Die Spektren der hemisphärischen Transmission im ON- und OFF-Zustand sind in Fig. 1 zu sehen. Die Schaltzeit zum Erreichen der maximalen Färbung (Transmission (610 nm) < 48 %) beträgt bei 1.5 V und 5 mA 6 Sekunden. Die Zeit für die Entfärbung (Transmission (610 nm) > 68 %) beträgt 8 Sekunden.

### Beispiel 2

Das elektrochrome Verbundglas wird durch Verkleben von zwei ITObeschichteten Gläsern aus 5 mm Floatglas, die durch ein Acrylklebeband der Dicke 1,5 mm entlang des Randes verbunden werden, vorbereitet. Es wird ein Gemisch aus 25,6 g Methylmethacrylat, 22,4 g 1,4-Butandioldiacrylat, 3,2 g Pentaerythritoltetraacrylat, 6,4 g 2-Hydroxyethylmethacrylat, 6,4 g Methacrylsäure, 48 g Ethylencarbonat, 48 g Poly(ethylenglycol)diacrylat (M = 700 g/mol), 16 g Lithiumperchlorat, 18,8 g 3,4-(2,2-Dimethyl-propylendioxy)thiophen (ProDOT-Me₂) und 0,28 g 2,2-Dimethoxy-2-phenylacetophenon hergestellt und im Dunkeln für 30 min. gerührt. Mittels einer Kanüle oder eines Trichters wird das Gemisch in den Hohlraum zwischen zwei 300 mm x 300 mm Scheiben gefüllt und anschließend der Rand des Fensters mit einem Zwei-Komponenten-Harz versiegelt. Im Anschluss wird das Glas in einer UV-Bestrahlungskammer für 30 min. ausgehärtet. Durch Anlegen einer 3,2 V-Gleichspannung für 3 min. bildet sich ein transparenter Poly(ProDOT-Me₂)-Film auf der Anode, der bei Entfernen der Spannung blau-violett wird. Der Verbund wird durch kurzes (5 Sekunden) Anlegen einer 1,5 V-Spannung entfärbt (OFF-Zustand), 1,5 V entgegengesetzter Polung färbt die Scheibe blau-violett (ON-Zustand).

## Patentansprüche

1. Elektrochromes Gießharzverbundglas mit
• einer ersten und einer zweiten Glasscheibe, die zumindest auf den zueinander zugewandten Seiten eine transparente leitfähige Beschichtung aufweisen,
• einem Abstandshalter zwischen der ersten und zweiten Glasscheibe, durch den ein Zwischenraum zwischen der ersten und zweiten Glasscheibe gebildet wird,
• der Zwischenraum mit einem aus Alkylacrylat- oder Acrylat-Monomeren und/oder deren Salzen gebildeten Harz enthaltend mindestens eine elektrochrome Verbindung oder Precursoren hiervon gefüllt ist,
**dadurch gekennzeichnet, dass** das Harz aus 40 bis 80 Gew.-% der Alkylacrylat- oder Acrylat-Monomeren und/oder deren Salzen gebildet ist und einen Vernetzungsgrad von mindestens 15 % aufweist.

2. Gießharzverbundglas nach Anspruch 1,
**dadurch gekennzeichnet, dass** die Alkylacrylat- oder Acrylat-Monomere ausgewählt sind aus der Gruppe bestehend aus Methylmethacrylat, Ethylacrylat, Butylacrylat, Hexylacrylat, Isobutylacrylat, tert-Butyl-acrylat, 1,4-Butandioldiacrylat, 1,4-Butanedioldimethacrylat, Pentaerythritoltetraacrylat, Pentaerythritoltriacrylat, 2-Hydroxyethylacrylat, 2-Hydroxyethylmethacrylat, 4-Hydroxybutylacrylat, 4-Hydroxybutylmethacrylat, Hydroxypropylacrylat, Methacrylsäure, 2-Methoxyethylacrylat, 2-Carboxyethylacrylat, 2-(Dimethylamino)ethylacrylat, Methyl-2-(hydroxymethyl)acrylat, Ethyl-2-(hydroxymethyl)acrylat, Di(ethylenglycol)ethyletheracrylat, 2-Phenoxyethylacrylat, 3-(Dimethylamino)propylacrylat, 2-(2-Ethoxyethoxy)ethylacrylat und 2-Hydroxy-3-phenoxypropylacrylat und Mischungen hiervon.

3. Gießharzverbundglas nach einem der vorhergehenden Ansprüche, **dadurch gekennzeichnet, dass** die Salze der Monomere ausgewählt sind aus der Gruppe bestehend aus Lithium-, Natrium oder Kaliumsalze sowie Oligomere von 2-Carboxyethylacrylat mit bis zu 5 Wiederholungseinheiten.

4. Gießharzverbundglas nach einem der vorhergehenden Ansprüche, **dadurch gekennzeichnet, dass** die transparente leitfähige Beschichtung aus FTO, ITO, ATO, AZO, Kohlenstoffnanoröhrchen oder Silber besteht oder dieses im Wesentlichen enthält.

5. Gießharzverbundglas nach einem der vorhergehenden Ansprüche, **dadurch gekennzeichnet, dass** das Harz 1 bis 10 Gew.-% mindestens eines Leitsalzes enthält, insbesondere ausgewählt aus der Gruppe bestehend aus ClO₄⁻, CF₃SO₃⁻, SbF₆⁻, N(CF₂SO₃)⁻, CF₃CO₂⁻, PF₆⁻, OH⁻, BF₄⁻, N(C₂F₄SO₂)⁻ sowie Kombinationen hiervon, insbesondere in Form von Lithiumsalzen.

6. Gießharzverbundglas nach einem der vorhergehenden Ansprüche, **dadurch gekennzeichnet, dass** das Harz 10 bis 50 Gew.-% einen polaren Weichmacher enthält, insbesondere ausgewählt aus der Gruppe bestehend aus
• organische Ester der Kohlensäure, insbesondere Diethylcarbonat, Propylencarbonat, Methylethylcarbonat, Methylpropylcarbonat, Ethylpropylcarbonat oder Ethylencarbonat,
• Polyether, insbesondere von 1,4-Butandiol, 1,3-Butandiol oder 1,2-Ethandiol, mit oder ohne polymerisierbare Endgruppen, sowie
• Mischungen hiervon.

7. Gießharzverbundglas nach einem der vorhergehenden Ansprüche, **dadurch gekennzeichnet, dass** das Harz 0,1 bis 5 Gew.-% mindestens eines π-elektronenreichen organischen Monomers enthält, insbesondere ausgewählt aus der Gruppe bestehend aus Pyrrol, Thiophen, Furan, 3,4-Ethylendioxythiophen, 3,4-Ethylendithiothiophen, 3 ,4-Propylendioxythiophen, 3 ,4-(2, 2-Dialkyl propylendioxy)thiophen, Bithiophen, Carbazol, Acetylen, Phenylen sowie Derivate und Kombinationen hiervon.

8. Gießharzverbundglas nach einem der vorhergehenden Ansprüche, **dadurch gekennzeichnet, dass** das Material der ersten und zweiten Glasscheibe ausgewählt ist aus der Gruppe bestehend aus Floatglas, TVG oder ESG, wobei die Glasscheiben bevorzugt eine Dicke im Bereich von 2 bis 12 mm aufweisen.

9. Gießharzverbundglas nach einem der vorhergehenden Ansprüche, **dadurch gekennzeichnet, dass** der Abstandshalter ein Klebeband ist, bevorzugt mit einer Dicke im Bereich von 0,1 bis 2,0 mm, insbesondere von 0,5 bis 1,5 mm.

10. Gießharzverbundglas nach einem der vorhergehenden Ansprüche, **dadurch gekennzeichnet, dass** das Gießharzverbundglas den Stempeltest nach DIN ISO 614 bis zu einer Kraft von 10 kN, insbesondere von 8 kN besteht.

11. Gießharzverbundglas nach einem der vorhergehenden Ansprüche, **dadurch gekennzeichnet, dass** nach Anlegen der zur Schaltung notwendigen Spannung bei einer Leistungsaufnahme von 0,05 mW/cm² in maximal 15 sek 95% des für den Farbstoff spezifischen Schalthubs erreicht wird.

12. Verfahren zur Herstellung eines elektrochromen Gießharzverbundglases nach einem der vorhergehenden Ansprüche mit folgenden Schritten:
a) Bereitstellung einer ersten und einer zweiten Glasscheibe, die zumindest auf einer Seiten eine transparente leitfähige Beschichtung aufweisen,
b) Herstellung einer Verbindung der mit der transparenten leitfähigen Beschichtung versehenen Seiten der ersten und zweiten Glasscheibe über mindestens einen Abstandshalter unter Ausbildung eines Zwischenraums zwischen der ersten und zweiten Glasscheibe,
c) Befüllung des Zwischenraums mit einem Gemisch aus Alkylacrylat- oder Acrylat-Monomeren und mindestens einer elektrochromen Verbindung oder Precursoren hiervon,
d) Thermische und/oder photochemische Vernetzung dieser Mischung unter Ausbildung eines transparenten, leitfähigen Harzes und
e) Durch Anlegen einer Gleichspannung ein elektrochromes konjugiertes Polymer gebildet wird.

13. Verfahren nach Anspruch 12,
**dadurch gekennzeichnet, dass** die Befüllung in Schritt c) mittels einer Kanüle oder einem Trichter erfolgt, wobei gegebenenfalls bei der Befüllung im Zwischenraum eingeschlossene Luftblasen mittels einer Kanüle entfernt werden.

14. Verfahren nach einem der Ansprüche 12 oder 13,
**dadurch gekennzeichnet, dass** die Vernetzung in Schritt d) durch Bestrahlung, insbesondere mit UV-Strahlung und/oder thermisch in einem Ofen bei Temperaturen im Bereich von 80 °C bis 120 °C erfolgt.

15. Verfahren nach einem der Ansprüche 12 bis 14,
**dadurch gekennzeichnet, dass** für die Vernetzung mindestens ein Polymerisationsstarter, insbesondere ein Photostarter, bevorzugt ausgewählt aus der Gruppe bestehend aus 2,2-Dimethoxy-2-phenylacetophenon, Benzophenon und Dimethoxyacetophenon sowie Mischungen hiervon, oder ein thermischer Starter, bevorzugt ausgewählt aus der Gruppe bestehend aus Azoisobutyronitril, Dibenzoylperoxid, Salze des Peroxodisulfats, insbesondere Ammoniumperoxodisulfat), tert-Butylperoxid, Diammoniumperoxid sowie Mischungen hiervon, verwendet wird.

16. Verfahren nach einem der Ansprüche 12 bis 15,
**dadurch gekennzeichnet, dass** in Schritt e) eine Gleichspannung im Bereich von 0,1 V bis 5,0 V über einen Zeitraum von 10 sek bis 60 min angelegt wird.

17. Verwendung des elektrochromen Gießharzverbundglases nach einem der Ansprüche 1 bis 11 zur Gebäudeverglasung oder Verglasung von Transportmitteln, insbesondere Fahrzeugen oder Schiffen, als Sonnenschutz oder Lichtblende.

## Claims

1. Electrochromic cast-resin laminated glass having
• a first and a second glass pane which have a transparent conductive coating at least on the sides orientated towards each other,
• a spacer between the first and the second glass pane, by means of which an intermediate space is formed between the first and second glass pane,
• the intermediate space is filled with a resin formed from alkyl acrylate- or acrylate monomers and/or the salts thereof comprising at least one electrochromic compound or precursors hereof,
**characterised in that** the resin is formed from 40 to 80% by weight of the alkyl acrylate- or acrylate monomers and/or the salts thereof and has a degree of crosslinking of at least 15%.

2. Cast-resin laminated glass according to claim 1,
**characterised in that** the alkyl acrylate- or acrylate monomers are selected from the group consisting of methyl methacrylate, ethyl acrylate, butyl acrylate, hexyl acrylate, isobutyl acrylate, tert-butyl acrylate, 1,4-butane diol diacrylate, 1,4-butane diol dimethacrylate, pentaerythritol tetraacrylate, pentaerythritol triacrylate, 2-hydroxyethyl acrylate, 2-hydroxyethyl methacrylate, 4-hydroxybutyl acrylate, 4-hydroxybutyl methacrylate, hydroxypropyl acrylate, methacrylic acid, 2-methoxyethyl acrylate, 2-carboxyethyl acrylate, 2-(dimethylamino)ethyl acrylate, methyl-2(hydroxymethyl) acrylate, ethyl-2-(hydroxymethyl) acrylate, di(ethylene glycol)ethylether acrylate, 2-phenoxyethyl acrylate, 3-(dimethylamino)propyl acrylate, 2-(2-ethoxyethoxy) ethyl acrylate and 2-hydroxy-3-phenoxypropyl acrylate and mixtures hereof.

3. Cast-resin laminated glass according to one of the preceding claims,
**characterised in that** the salts of the monomers are selected from the group consisting of lithium-, sodium- or potassium salts and also oligomers of 2-carboxyethyl acrylate with up to 5 repetition units.

4. Cast-resin laminated glass according to one of the preceding claims,
**characterised in that** the transparent conductive coating consists of FTO, ITO, ATO, AZO, carbon nanotubes or silver or essentially comprises this.

5. Cast-resin laminated glass according to one of the preceding claims,
**characterised in that** the resin comprises 1 to 10% by weight of at least one conductive salt, in particular selected from the group consisting of ClO₄⁻, CF₃SO₃⁻, SbF₆⁻, N(CF₂SO₃)⁻, CF₃CO₂⁻, PF₆⁻, OH⁻, BF₄⁻, N(C₂F₄SO₂)⁻ and also combinations hereof, in particular in the form of lithium salts.

6. Cast-resin laminated glass according to one of the preceding claims,
**characterised in that** the resin comprises 10 to 50% by weight of a polar plasticiser, in particular selected from the group consisting of
• organic esters of carbonic acid, in particular diethyl carbonate, propylene carbonate, methylethyl carbonate, methylpropyl carbonate, ethylpropyl carbonate or ethylene carbonate,
• polyethers, in particular of 1,4-butane diol, 1,3-butane diol or 1,2-ethane diol, with or without polymerisable end groups, and also
• mixtures hereof.

7. Cast-resin laminated glass according to one of the preceding claims,
**characterised in that** the resin comprises 0.1 to 5% by weight of at least one π-electron-rich organic monomer, in particular selected from the group consisting of pyrrole, thiophene, furan, 3,4-ethylene dioxythiophene, 3,4-ethylene dithiothiophene, 3,4-propylene dioxythiophene, 3,4-(2,2-dialkylpropylenedioxy)thiophene, bithiophene, carbazole, acetylene, phenylene and also derivatives and combinations hereof.

8. Cast-resin laminated glass according to one of the preceding claims,
**characterised in that** the material of the first and second glass pane is selected from the group consisting of float glass, TVG or ESG, the glass panes preferably having a thickness in the range of 2 to 12 mm.

9. Cast-resin laminated glass according to one of the preceding claims,
**characterised in that** the spacer is an adhesive strip, preferably with a thickness in the range of 0.1 to 2.0 mm, in particular of 0.5 to 1.5 mm.

10. Cast-resin laminated glass according to one of the preceding claims,
**characterised in that** the cast-resin laminated glass passes the punch test according to DIN ISO 614 up to a force of preferably 10 kN, in particular of 8 kN.

11. Cast-resin laminated glass according to one of the preceding claims,
**characterised in that**, after applying the voltage necessary for the switching, at a power absorption of 0.05 mW/cm², 95% of the switch distance which is specific for the pigment is achieved in max. 15 sec.

12. Method for the production of an electrochromic cast-resin laminated glass according to one of the preceding claims, having the following steps:
a) provision of a first and a second glass pane which have, at least on one side, a transparent conductive coating,
b) production of a connection of the sides of the first and second glass pane, which are provided with the transparent conductive coating, via at least one spacer with formation of an intermediate space between the first and second glass pane,
c) filling of the intermediate space with a mixture of alkyl acrylate- or acrylate monomers and at least one electrochromic compound or precursors hereof,
d) thermal and/or photochemical crosslinking of this mixture with formation of a transparent, conductive resin and
e) by applying a direct voltage, an electrochromic conjugated polymer is formed.

13. Method according to claim 12,
**characterised in that** the filling in step c) is effected by means of a cannula or a funnel, any air bubbles possibly enclosed in the intermediate space during filling being removed by means of a cannula.

14. Method according to one of the claims 12 or 13, **characterised in that** the crosslinking in step d) is effected by irradiation, in particular with UV radiation and/or thermally in a furnace at temperatures in the range of 80°C to 120°C.

15. Method according to one of the claims 12 to 14, **characterised in that**, for the crosslinking, at least one polymerisation starter is used, in particular a photostarter, preferably selected from the group consisting of 2,2-dimethoxy-2-phenylacetophenone, benzophenone and dimethoxyacetophenone and also mixtures hereof, or a thermal starter, preferably selected from the group consisting of azoisobutyronitrile, dibenzoyl peroxide, salts of peroxodisulphate, in particular ammonium peroxodisulphate, tert-butyl peroxide, diammonium peroxide and also mixtures hereof.

16. Method according to one of the claims 12 to 15, **characterised in that**, in step e), a direct voltage in the range of 0.1 V to 5.0 V is applied over a period of time of 10 sec up to 60 min.

17. Use of the electrochromic cast-resin laminated glass according to one of the claims 1 to 11 for glazing in buildings or glazing of transport means, in particular vehicles or ships, as sun protection or light shade.

## Revendications

1. Verre feuilleté avec résine de coulée électrochrome, comprenant
• une première et une deuxième feuille de verre, qui au moins sur les faces dirigées l'une vers l'autre présentent un revêtement conducteur transparent,
• un espaceur entre la première et la deuxième feuille de verre, grâce auquel est formé un espace intermédiaire entre la première et la deuxième feuille de verre,
• l'espace intermédiaire est rempli d'une résine formée de monomères d'acrylate d'alkyle ou de monomères d'acrylate et/ou de leurs sels, contenant au moins un composé électrochrome ou des précurseurs de celui-ci,
**caractérisé en ce que** la résine est formée de 40 à 80 % en poids des monomères d'acrylate d'alkyle ou des monomères d'acrylate et/ou de leurs sels, et présente un degré de réticulation d'au moins 15 %.

2. Verre feuilleté avec résine de coulée selon la revendication 1, **caractérisé en ce que** les monomères d'acrylate d'alkyle ou les monomères d'acrylate sont choisis dans le groupe consistant en le méthacrylate de méthyle, l'acrylate d'éthyle, l'acrylate de butyle, l'acrylate d'hexyle, l'acrylate d'isobutyle, l'acrylate de tert-butyle, le diacrylate de 1,4-butanediol, le diméthacrylate de 1,4-butanediol, le tétraacrylate de pentaérythritol, le triacrylate de pentaérythritol, l'acrylate de 2-hydroxyéthyle, le méthacrylate de 2-hydroxyéthyle, l'acrylate de 4-hydroxybutyle, le méthacrylate de 4-hydroxybutyle, l'acrylate d'hydroxypropyle, l'acide méthacrylique, l'acrylate de 2-méthoxyéthyle, l'acrylate de 2-carboxyéthyle, l'acrylate de 2-(diméthylamino)éthyle, le 2-(hydroxyméthyl)acrylate de méthyle, le 2-(hydroxyméthyl)acrylate d'éthyle, l'acrylate de l'éther éthylique du di(éthylèneglycol), l'acrylate de 2-phénoxyéthyle, l'acrylate de 3-(diméthylamino)propyle, l'acrylate de 2-(2-éthoxyéthoxy)éthyle et l'acrylate de 2-hydroxy-3-phénoxypropyle et les mélanges de ceux-ci.

3. Verre feuilleté avec résine de coulée selon l'une des revendications précédentes, **caractérisé en ce que** les sels des monomères sont choisis dans le groupe consistant en les sels de lithium, de sodium ou de potassium, ainsi que les oligomères d'acrylate de 2-carboxyéthyle ayant jusqu'à 5 motifs répétitifs.

4. Verre feuilleté avec résine de coulée selon l'une des revendications précédentes, **caractérisé en ce que** le revêtement conducteur transparent est constitué de FTO, d'ITO, d'ATO, d'AZO, de nanotubes de carbone ou d'argent, ou pour l'essentiel les contient.

5. Verre feuilleté avec résine de coulée selon l'une des revendications précédentes, **caractérisé en ce que** la résine contient 1 à 10 % en poids d'au moins un sel conducteur, choisi en particulier dans le groupe consistant en ClO₄⁻, CF₃SO₃⁻, SbF₆⁻, N(CF₂SO₃)⁻, CF₃CO₂⁻, PF₆⁻, OH⁻, BF₄⁻, N(C₂F₄SO₂)⁻, ainsi que les combinaisons de ceux-ci, en particulier sous forme de sels de lithium.

6. Verre feuilleté avec résine de coulée selon l'une des revendications précédentes, **caractérisé en ce que** la résine contient 10 à 50 % en poids d'un plastifiant polaire, choisi en particulier dans le groupe consistant en
• les esters organiques de l'acide carbonique, en particulier le carbonate de diéthyle, le carbonate de propylène, le carbonate de méthyléthyle, le carbonate de méthylpropyle, le carbonate d'éthylpropyle ou le carbonate d'éthylène,
• les polyéthers, en particulier du 1,4-butanediol, du 1,3-butanediol ou du 1,2-éthanediol, avec ou sans groupes terminaux polymérisables, ainsi que
• les mélanges de ceux-ci.

7. Verre feuilleté avec résine de coulée selon l'une des revendications précédentes, **caractérisé en ce que** la résine contient 0,1 à 5 % en poids d'au moins un monomère organique riche en électrons π, choisi en particulier dans le groupe consistant en le pyrrol, le thiophène, le furanne, le 3,4-éthylènedioxythiophène, le 3,4-éthylènedithiothiophène, le 3,4-propylènedioxythiophène, le 3,4-(2,2-dialkylpropylènedioxy)thiophène, le bithiophène, le carbazole, l'acétylène, le phénylène, ainsi que les dérivés et combinaisons de ceux-ci.

8. Verre feuilleté avec résine de coulée selon l'une des revendications précédentes, **caractérisé en ce que** le matériau de la première et de la deuxième feuille de verre est choisi dans le groupe consistant en le verre flotté, le verre TVG ou le verre ESG, les feuilles de verre présentant de préférence une épaisseur comprise dans la plage de 2 à 12 mm.

9. Verre feuilleté avec résine de coulée selon l'une des revendications précédentes, **caractérisé en ce que** l'espaceur est une bande adhésive, ayant de préférence une épaisseur comprise dans la plage de 0,1 à 2,0 mm, en particulier de 0,5 à 1,5 mm.

10. Verre feuilleté avec résine de coulée selon l'une des revendications précédentes, **caractérisé en ce que** le verre feuilleté avec résine de coulée valide l'essai au poinçon selon DIN ISO 614 jusqu'à une force de 10 kN, en particulier de 8 kN.

11. Verre feuilleté avec résine de coulée selon l'une des revendications précédentes, **caractérisé en ce que**, après application de la tension nécessaire à la commutation, pour une consommation de puissance de 0,05 mW/cm², on atteint au maximum en 15 secondes 95 % de la différence entre transmissions lumineuses spécifique du colorant.

12. Procédé de fabrication d'un verre feuilleté avec résine de coulée selon l'une des revendications précédentes, comportant les étapes suivantes :
a) fourniture d'une première et d'une deuxième feuille de verre, qui présentent sur au moins une face un revêtement conducteur transparent,
b) fabrication d'une liaison des faces pourvues du revêtement conducteur transparent de la première et de la deuxième feuille de verre, par le biais d'au moins un espaceur, avec formation d'un espace intermédiaire entre la première et la deuxième feuille de verre,
c) remplissage de l'espace intermédiaire avec un mélange de monomères d'acrylates d'alkyle ou de monomères d'acrylates et d'au moins un composé électrochrome ou de précurseurs de celui-ci,
d) réticulation thermique et/ou photochimique de ce mélange, avec formation d'une résine conductrice transparente, et
e) par application d'une tension continue, formation d'un polymère conjugué électrochrome.

13. Procédé selon la revendication 12, **caractérisé en ce que** le remplissage de l'étape c) est réalisé à l'aide d'une canule ou d'un entonnoir, les bulles d'air incluses dans l'espace intermédiaire étant éventuellement, lors du remplissage, éliminées à l'aide d'une canule.

14. Procédé selon l'une des revendications 12 ou 13, **caractérisé en ce que** la réticulation de l'étape d) est réalisée par un rayonnement, en particulier un rayonnement UV et/ou par voie thermique dans un four à des températures comprises dans la plage de 80 °C à 120 °C.

15. Procédé selon l'une des revendications 12 à 14, **caractérisé en ce qu'**on utilise pour la réticulation au moins un amorceur de polymérisation, en particulier un photoamorceur, de préférence choisi dans le groupe consistant en la 2,2-diméthoxy-2-phénylacétophénone, la benzophénone ou la diméthoxyacétophénone, ainsi que les mélanges de celles-ci, ou un amorceur thermique, choisi de préférence dans le groupe consistant en l'azoisobutyronitrile, le peroxyde de dibenzoyle, les sels peroxodisulfates, en particulier le peroxodisulfate d'ammonium, le peroxyde de tert-butyle, le peroxyde de diammonium, ainsi que les mélanges de ceux-ci.

16. Procédé selon l'une des revendications 12 à 15, **caractérisé en ce que**, dans l'étape e), on applique une tension continue comprise dans la plage de 0,1 V à 5,0 V sur une durée de 10 s à 60 min.

17. Utilisation du verre feuilleté avec résine de coulée électrochrome selon l'une des revendications 1 à 11 pour des vitrages de bâtiments ou des vitrages de moyens de transport, en particulier des véhicules ou des navires, en tant que protection solaire ou paralume.
